# EUROPEAN PATENT APPLICATION

(11) **EP 4 184 640 A1**
(43) Date of publication of application: **24.05.2023**
(21) Application number: 21931930.8
(22) Date of filing: 29.09.2021
(51) Int. Cl.: H01M 10/0525

(54) **ELECTRODE ASSEMBLY AND MANUFACTURING METHOD AND DEVICE THEREFOR, BATTERY AND ELECTRICAL APPARATUS**

(71) Applicant: Contemporary Amperex Technology Co., Limited, Fujian 352100 (CN)
(72) Inventor: XU, Hu, Ningde Fujian 352100 (CN); HUANG, Siying, Ningde Fujian 352100 (CN); ZHAO, Fenggang, Ningde Fujian 352100 (CN); JIN, Haizu, Ningde Fujian 352100 (CN)
(74) Representative: von Tietzen und Hennig, Nikolaus
(86) International application number: PCT/CN2021/121609
(87) International publication number: WO 2023/050124

(57) **Abstract**

Embodiments of the present application provide an electrode assembly and a manufacturing method and apparatus therefor, a battery, and a power consuming device, the electrode assembly being used for a battery cell (100) and the electrode assembly (10) including: a first electrode plate (1) and a second electrode plate (2) that have opposite polarities, where the first electrode plate (1) and the second electrode plate (2) each include a main body portion (11) and a tab (12) projecting from the main body portion (11), and the first electrode plate (1) and the second electrode plate (2) are wound about a winding axis (K) such that the respective main body portions (11) form a wound main body (S); and an end portion of the wound main body (S) includes at least one conductive region (121) and at least one liquid guiding region (111), where the tab (12) is led out of the conductive region (121), is wound by at least one turn, and is used for electrical connection to a terminal (1022) of the battery cell (100), and the liquid guiding region (111) is arranged adjacent to the conductive region (121) in a radial direction of the wound main body (S) and is used for guiding an electrolyte to flow into an interior of the wound main body (S).

## Description

### Technical Field

The present application relates to the technical field of batteries, and in particular, to an electrode assembly and a manufacturing method and apparatus therefor, a battery, and a power consuming device.

### Background Art

With the advantages such as high energy density, high power density, many times of cyclic use, and long storage time, batteries such as lithium-ion batteries have been widely applied in electric vehicles.

However, how to enhance the working performance of batteries of the electric vehicles has been always a problem in this industry.

### Summary of the Invention

The present application aims to enhance the performance of batteries.

According to a first aspect of the present application, an electrode assembly for a battery cell is provided. The electrode assembly comprises: a first electrode plate and a second electrode plate that have opposite polarities, the first electrode plate and the second electrode plate each comprising a main body portion and a tab projecting from the main body portion, and the first electrode plate and the second electrode plate being wound about a winding axis such that the respective main body portions form a wound main body.

An end portion of the wound main body comprises at least one conductive region and at least one liquid guiding region, wherein the tab is led out of the conductive region, is wound by at least one turn, and is used for electrical connection to a terminal of the battery cell; and the liquid guiding region is arranged adjacent to the conductive region in a radial direction of the wound main body and is used for guiding an electrolyte to flow into an interior of the wound main body.

In the embodiment of the present application, the end portion of the wound main body simultaneously has the conductive region and the liquid guiding region. Since no tab is provided in the liquid guiding region, after the tab of the conductive region is flattened, the electrolyte in the battery cell also easily flows into the interior of the wound main body through a gap between the first electrode plate and the second electrode plate in the liquid guiding region, ensuring the infiltration performance of the electrode assembly, so that the electrolyte can sufficiently react with active materials on the first electrode plate and the second electrode plate during charging and discharging of the battery, and the performance of the battery cell is thus optimized.

Furthermore, since the tab extends continuously and is wound by at least one turn in the conductive region, the tab has better connection strength with the main body portion in a circumferential direction, such that a root portion of the tab has a better self-supporting effect, a crumpling phenomenon of the tab is prevented in the process of flattening the tab by applying a circumferential acting force, the shape of a flattened region is stabilized, the effect of welding the tab and the terminal is optimized, it is ensured that the electrode assembly reliably transmits electric energy outwards, and the overcurrent capacity is improved. In addition, particles generated during welding of the tab are less prone to dropping between the first electrode plate and the second electrode plate of the liquid guiding region in the circumferential direction, so that the working reliability of the electrode assembly can be improved, and the problem of short circuit or scratch of the electrode plate can be solved.

Moreover, by providing the continuous tab on part of the winding length of the main body portion, the overcurrent capacity of the tab can be satisfied without providing discrete tabs on the entire winding length of the main body portion, so that a process of die-cutting an electrode plate can be simplified, and meanwhile, when the first electrode plate and the second electrode plate are wound to form the wound main body, there is also no need to perform alignment of the tabs, thus the process can be simplified, and the production efficiency of the electrode assembly can be increased.

In some embodiments, the tab is wound by a plurality of turns in the conductive region.

In the embodiment of the present application, the supporting effect on the tab is further strengthened by winding the tab by a plurality of turns in the conductive region and making bent portions of adjacent tabs overlapped with each other after flattening, so that the tab can be prevented from being crumpled during flattening, the shapes of the bent portions can be stable, and the effect of welding the tab and the terminal can be optimized; in addition, the welding area of the tab and the terminal after flattening can also be increased, so that the tab and the terminal can be welded more firmly, it is ensured that the electrode assembly reliably transmits electric energy outwards, and the overcurrent capacity is improved.

In some embodiments, the sum of the number of the conductive regions and the number of the liquid guiding regions is greater than or equal to three, and the regions are alternately provided in the radial direction of the wound main body.

In this embodiment of the present application, by alternately providing at least three conductive regions and at least three liquid guiding regions in the radial direction of the wound main body, the electrolyte entering the interior of the wound main body from the liquid guiding regions can more easily reach the conductive regions, which facilitates rapid infiltration of the electrolyte; also, this structure can shorten a transmission distance of electrons from the liquid guiding region to the conductive region, ensure the timely and effective transmission of electrons, improve the uniformity of current distribution, and solve the polarization problem of the electrode assembly.

In some embodiments, the conductive region is located in a middle region of the end portion of the wound main body in the radial direction, and a liquid guiding region is provided on either side of the conductive region in the radial direction.

In this embodiment of the present application, a liquid guiding region is provided on either side of the conductive region in the radial direction, and the electrolyte can simultaneously enter the interior of the wound main body via the two liquid guiding regions and permeates into the portions of the first electrode plate and the second electrode plate located in the conductive region, so that the infiltration performance of the electrolyte of the electrode assembly can be further enhanced. Furthermore, the transmission distance of the electrons from an inner-layer liquid guiding region and an outer-layer liquid guiding region to the conductive region is shortened, so that the uniformity of current distribution can be improved, and the polarization problem can be solved. Moreover, one conductive region is provided to facilitate electrical connection of the tab and the terminal. All of the above advantages can enhance the performance of the battery.

In some embodiments, at least one of the first electrode plate and the second electrode plate is provided with a plurality of tabs at intervals in a winding direction, so as to form a plurality of radially spaced conductive regions at the end portion of the wound main body.

In this embodiment of the present application, the electrolyte entering the interior of the wound main body via the liquid guiding region is allowed to simultaneously permeate into the conductive regions on two sides, so that the electrolyte smoothly reaches the portions of the first electrode plate and the second electrode plate located in the conductive region, and the infiltration performance of the electrolyte of the electrode assembly is enhanced. Moreover, the electrons can simultaneously reach the conductive region from an inner side and an outer side of the liquid guiding region in the radial direction, so that the transmission distance of the electrons can be greatly shortened, the uniformity of current distribution can be improved, and the polarization problem can be solved; when the first electrode plate and the second electrode plate are longer after being unwound, the polarization problem caused by the long local transmission distance of the electrons can be better solved by designing segmented tabs. Furthermore, by providing the plurality of conductive regions, the overall length of the tab disposed in the radial direction can be increased to facilitate welding of the tab and an adapter, and the tab is electrically connected to the terminal by means of the adapter. All of the above advantages can enhance the performance of the battery.

In some embodiments, two conductive regions are provided and are respectively located on an inner side and an outer side of the end portion of the wound main body in the radial direction, and the liquid guiding region is located between the two conductive regions.

In this embodiment of the present application, the two conductive regions are provided in a non-infiltration bottleneck region, for example, an inner ring and an outer ring of the electrode assembly, so that an infiltration effect can be optimized, and the polarization problem can also be solved.

In some embodiments, one conductive region and one liquid guiding region are respectively provided, and the conductive region is located on an inner side of the conductive region in the radial direction.

In this embodiment of the present application, the conductive region is provided on the inner side of the liquid guiding region, and on the basis of ensuring an infiltration characteristic of the electrode assembly by means of the liquid guiding region, the tab can also be prevented from being in contact with an inner wall of a shell after the tab is flattened to form the bent portion, or the particles can be prevented from falling onto the inner side wall of the shell when the tab and the terminal are welded, so as to avoid short circuit and improve the working safety of the battery cell.

In some embodiments, the liquid guiding regions at two ends of the wound main body have the same radial dimension, and the conductive regions at the two ends of the wound main body have the same radial dimension.

In this embodiment of the present application, the two ends of the wound main body are structurally symmetrical, so that the first electrode plate and the second electrode plate can be processed to have the same structure, the processing difficulty of the electrode assembly can be reduced, and the production efficiency of the electrode assembly can be increased.

In some embodiments, the liquid guiding region at one end of the wound main body has the same radial dimension as the conductive region at the other end.

In this embodiment of the present application, the conductive regions and the liquid guiding regions at the two ends of the wound main body are provided in a staggered manner in the radial direction, namely, the conductive region at one end of the wound main body corresponds to the liquid guiding region at the other end, such that the wound main body has the liquid guiding region at any position in the radial direction, the electrolyte is allowed to enter the interior of the wound main body more quickly and sufficiently, the distribution of the electrolyte in the interior of the electrode assembly is more uniform, which makes the electrolyte uniformly react with the active materials on the first electrode plate and the second electrode plate during the charging and discharging of the battery, and the performance of the battery cell is thus optimized.

In some embodiments, the electrode assembly further comprises a separator for separating the first electrode plate from the second electrode plate; and the separator, the main body portion of the first electrode plate and the main body portion of the second electrode plate are wound to form a wound main body.

In an extending direction of the winding axis, the portion of the separator located in the liquid guiding region extends beyond a side edge of the main body portion of the first electrode plate and beyond a side edge of the main body portion of the second electrode plate.

In this embodiment of the present application, the separator is designed to be in a stepped shape and is widened in the liquid guiding region, so that a side edge of the separator extends outwards between the first electrode plate and the second electrode plate in the liquid guiding region and is soaked in the electrolyte to allow the separator to more easily absorb the electrolyte under a capillary action, the infiltration performance of the electrode assembly is enhanced, and the performance of the battery cell is thus enhanced.

In some embodiments, the electrode assembly further comprises a separator for separating the first electrode plate from the second electrode plate. The main body portion of at least one of the first electrode plate and the second electrode plate comprises an active material region and a flow guiding region provided side by side in the extending direction of the winding axis, wherein the flow guiding region is located on an outer side of the active material region, and a gap between the surface of the main body portion located in the flow guiding region and the separator is greater than a gap between the surface of the main body portion located in the active material region and the separator.

In this embodiment of the present application, the gap between the surface of the main body portion located in the flow guiding region and the separator is set to be greater than the gap between the surface of the main body portion located in the active material region and the separator, so that a larger capillary gap can be formed between the flow guiding region and the separator, and after the electrolyte is absorbed into an end portion of the separator, the electrolyte can rapidly enter the end portion of the wound main body and then further enter the active material region to react with an active material. This structure allows the gap between the main body portion and the separator to be gradually decreased from outside to inside, facilitating rapid entry of the electrolyte.

In some embodiments, the flow guiding region of at least one of the first electrode plate and the second electrode plate comprises an infiltration region adjacent to the active material region, with the gap between the surface of the main body portion located in the infiltration region and the separator being gradually increased from inside to outside in the extending direction of the winding axis.

In this embodiment of the present application, it is possible to introduce the electrolyte into the active material region via the infiltration region after the electrolyte is absorbed at the end portion of the separator, facilitating rapid entry of the electrolyte into the interior of the wound main body for reaction.

In some embodiments, the flow guiding region of at least one of the first electrode plate and the second electrode plate comprises an infiltration region adjacent to the active material region. The main body portion of at least one of the first electrode plate and the second electrode plate comprises a current collector, an active material layer and an infiltration layer, wherein the active material layer is provided on a surface of the current collector and located in the active material region, the infiltration layer is provided on the surface of the current collector and located in the infiltration region, and the infiltration layer has a higher liquid absorption capacity than the active material layer.

In this embodiment of the present application, by coating the region of the main body portion close to the outer side with an infiltration layer having a higher liquid absorption capacity than the active material layer, the capability of absorbing the electrolyte by the end portion of the wound main body can be improved by using the material characteristic of the infiltration layer so as to facilitate rapid absorption of the electrolyte into the interior of the wound main body.

In some embodiments, the infiltration layer comprises an inorganic ceramic coating, a high molecular polymer, and a binder.

In some embodiments, the flow guiding region of at least one of the first electrode plate and the second electrode plate further comprises a guide region, wherein the region of the current collector beyond the infiltration layer in the extending direction of the winding axis forms the guide region.

In this embodiment of the present application, the coating layer is not provided in the guide region, so that the gap between the current collector and the separator in the guide region is greater than the gap between the surface of the infiltration layer and the separator, and a multi-stage electrolyte absorption channel can be formed at the end portion of the wound main body located in the liquid guiding region. Also, the distance between the first electrode plate or the second electrode plate and the separator is gradually decreased from the guide region, the infiltration region to the active material region, so that the liquid absorption efficiency can be significantly increased, and the infiltration characteristic of the electrode assembly can be improved, and thus the performance of the battery cell can be enhanced.

In some embodiments, the first electrode plate is a positive electrode plate and is sequentially provided with an active material region, an infiltration region, and a guide region from inside to outside in the extending direction of the winding axis, and the second electrode plate is a negative electrode plate and is sequentially provided with an active material region and a guide region from inside to outside along the winding axis.

In this embodiment of the present application, considering that the compaction density of the positive electrode plate is relatively high and the speed of the electrolyte entering the positive electrode plate is relatively low, the speed of the electrolyte permeating into a positive electrode active material can be increased by adding an infiltration region to the positive electrode plate; and the speed of the electrolyte entering the negative electrode plate is higher than that of the electrolyte entering the positive electrode plate, and by introducing the electrolyte only via the guide region, a manufacturing process of the negative electrode plate can be simplified. In this embodiment, the speeds of the electrolyte entering the positive electrode plate and the negative electrode plate can be similar, and the production difficulty of the electrode assembly can also be reduced.

In some embodiments, the side edge of the separator located in the liquid guiding region of at least one of the first electrode plate and the second electrode plate is located between an outer side edge of the flow guiding region and an outer side edge of the tab.

In this embodiment of the present application, the side edge of the separator is provided beyond the outer side edge of the flow guiding region, so that the extending portion of the separator can be soaked in the electrolyte so as to absorb the electrolyte under the capillary action; also, the side edge of the separator is not beyond the outer side edge of the tab, so that excessive extension of the separator in the conductive region can be prevented from affecting the flattening of the tab, and the conductive effect of the tab can be ensured.

In some embodiments, the flow guiding region is consistent with the active material region in extension length in a circumferential direction of the wound main body.

In this embodiment of the present application, the manufacturing difficulty of the electrode plate provided with the flow guiding region can be reduced, and the flow guiding region is consistent with the active material region in extension length, so that the electrolyte can be better guided to reach the active material region over the whole coating length of the active material region, the electrolyte can be uniformly distributed over the whole winding length of the electrode plate, and the performance of the battery cell can be thus enhanced.

According to a second aspect of the present application, a battery cell is provided, comprising: a shell provided with an opening; an end cap assembly for closing the opening, the end cap assembly comprising an end cap body and a terminal provided on the end cap body; and the electrode assembly of the above-mentioned embodiment, provided in the shell, with a tab of a first electrode plate or a tab of a second electrode plate being electrically connected to a terminal.

In the battery cell of this embodiment of the present application, since the electrode assembly has a superior infiltration characteristic, the tab and the terminal have higher electrical connection reliability, and the performance of the battery cell can be enhanced.

According to a third aspect of the present application, a battery is provided, comprising: the battery cell of the above-mentioned embodiment; and a case for receiving the battery cell.

According to a fourth aspect of the present application, a power consuming device is provided, comprising the battery of the above-mentioned embodiment. The battery is used for supplying electric energy to the power consuming device.

According to a fifth aspect of the present application, a manufacturing method for a battery assembly is provided, comprising:
providing a first electrode plate and a second electrode plate that have opposite polarities, the first electrode plate and the second electrode plate each comprising a main body portion and a tab projecting from the main body portion; and
winding the first electrode plate and the second electrode plate about a winding axis such that the respective main body portions form a wound main body, an end portion of the wound main body comprising at least one conductive region and at least one liquid guiding region.

The tab is led out of the conductive region, is wound by at least one turn, and is used for electrical connection to a terminal of the battery cell, and the liquid guiding region is arranged adjacent to the conductive region in a radial direction of the wound main body and is used for guiding an electrolyte to flow into the interior of the wound main body.

According to a sixth aspect of the present application, a manufacturing apparatus for an electrode assembly is provided, comprising:
an electrode plate providing device configured to provide a first electrode plate and a second electrode plate that have opposite polarities, the first electrode plate and the second electrode plate each comprising a main body portion and a tab projecting from the main body portion; and
an electrode plate winding device configured to wind the first electrode plate and the second electrode plate about a winding axis such that the respective main body portions form a wound main body, an end portion of the wound main body comprising at least one conductive region and at least one liquid guiding region.

The tab is led out of the conductive region, is wound by at least one turn, and is used for electrical connection to a terminal of the battery cell, and the liquid guiding region is arranged adjacent to the conductive region in a radial direction of the wound main body and is used for guiding an electrolyte to flow into the interior of the wound main body.

### Brief Description of the Drawings

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without any creative effort.
Fig. 1 is a schematic structural diagram of a battery mounted to a vehicle according to some embodiments of the present application.
Fig. 2 is an exploded view of a battery according to some embodiments of the present application.
Fig. 3 is a schematic structural diagram of a battery cell in the battery according to some embodiments of the present application.
Fig. 4 is a first exploded view of the battery cell in the battery according to some embodiments of the present application.
Fig. 5 is a second exploded view of the battery cell in the battery according to some embodiments of the present application.
Fig. 6 is a cross-sectional view of the battery according to a first embodiment of the present application.
Fig. 7 is a schematic diagram of an end face of an electrode assembly in the battery shown in Fig. 6.
Fig. 8 is a cross-sectional view of the battery according to a second embodiment of the present application.
Fig. 9 is a schematic diagram of an end face of an electrode assembly in the battery shown in Fig. 8.
Fig. 10 is a cross-sectional view of the battery according to a third embodiment of the present application.
Fig. 11 is a schematic diagram of an end face of an electrode assembly in the battery shown in Fig. 10.
Figs. 12A, 12B, and 12C are respectively schematic structural diagrams of a first electrode plate, a second electrode plate, and a separator according to some embodiments of the electrode assembly.
Figs. 13A, 13B, and 13C are respectively schematic structural diagrams of the first electrode plate, the second electrode plate, and the separator according to other embodiments of the electrode assembly.
Figs. 14A, 14B, and 14C are respectively schematic structural diagrams of the first electrode plate, the second electrode plate, and the separator according to further embodiments of the electrode assembly.
Fig. 15 is a schematic structural diagram of the first electrode plate in the battery according to the first embodiment shown in Fig. 6.
Fig. 16 is a schematic structural diagram of the first electrode plate in the battery according to the second embodiment shown in Fig. 8.
Fig. 17 is a schematic structural diagram of a side face of the first electrode plate according to some embodiments.
Fig. 18 is a schematic structural diagram of the side face of the first electrode plate according to other embodiments.
Fig. 19 is a schematic structural diagram of the first electrode plate, the second electrode plate, and the separator superimposed prior to winding according to some embodiments.
Fig. 20 is a schematic flow chart of a manufacturing method for an electrode assembly according to some embodiments of the present application.
Fig. 21 is a schematic diagram showing module composition of a manufacturing apparatus for an electrode assembly according to some embodiments of the present application.

In the accompanying drawings, the figures are not drawn to actual scale.

### List of reference numerals:

10. Electrode assembly; 1. First electrode plate; 11. Main body portion; 111. Liquid guiding region; 112. Active material layer; 113. Infiltration layer; 114. Current collector; 12. Tab; 121. Conductive region; 122. Transitional portion; 2. Second electrode plate; 3. Separator;
100. Battery cell; 101. Shell; 1011. Opening; 102. End cap assembly; 1021. End cap body; 1022. Terminal; 1023. Pressure relief component; 1024. Insulator; 1024'. Projection portion; 1025. Adapter; 1025A. First connecting piece; 1025B. Second connecting piece;
200. Battery; 201. Case; 201A. Receiving portion; 201B. First cover body; 201C. Second cover body;
300. Vehicle; 301. Axle; 302. Wheel; 303. Motor; 304. Controller;
400. Manufacturing apparatus; 410. Electrode plate providing device; 420. Electrode plate winding device;
S. Wound main body; K. Winding axis; A. Active material region; B. Flow guiding region; B 1. Infiltration region; B2. Guide region.

### Detailed Description of Embodiments

The following further describes in detail implementations of the present application with reference to the accompanying drawings and embodiments. The detailed description of the following embodiments and the drawings are used to illustrate the principle of the present application by way of example, but shall not be used to limit the scope of the present application. In other words, the present application is not limited to the described embodiments.

In the description of the present application, it should be noted that, unless otherwise specified, "a plurality of' means at least two. An orientation or a positional relationship indicated by the terms "upper", "lower", "left", "right", "inner", "outer", etc. is merely for convenient and brief description of the present application, rather than indicating or implying that an indicated apparatus or element needs to have a particular orientation or be constructed and operated in a particular orientation, and therefore cannot be construed as limiting the present application.

In addition, the terms "first", "second", "third", etc. are merely for the purpose of description, and shall not be construed as indicating or implying relative importance. "Perpendicular" is not necessarily perpendicular in the strict sense, and a range of errors is allowed. "Parallel" is not necessarily parallel in the strict sense, and a range of errors is allowed. The orientation terms in the following description all indicate directions shown in the drawings, and do not impose a limitation on a specific structure in the present application.

In the description of the present application, it should further be noted that, the terms "mount", "engage", and "connect" should be interpreted in the broad sense unless explicitly defined and limited otherwise, which, for example, may mean a fixed connection, a detachable connection or an integral connection; or may mean a direct connection, or an indirect connection by means of an intermediary. For those of ordinary skill in the art, specific meanings of the foregoing terms in the present application may be understood in specific circumstances.

The phrase "embodiment" mentioned herein means that the specific features, structures and characteristics described in conjunction with the embodiment may be included in at least some embodiments of the present application. The phrase at various locations in the specification does not necessarily refer to the same embodiment, or an independent or alternative embodiment exclusive of another embodiment. Those skilled in the art understand explicitly or implicitly that an embodiment described herein may be combined with another embodiment.

In the description of the embodiments of the present application, the term "a plurality of" means two or more (including two), similarly the term "a plurality of groups" means two or more groups (including two groups), and the term "a plurality of pieces" means two or more pieces (including two pieces).

The present application uses the description of the orientations or positional relationships indicated by the terms "upper", "lower", "top", "bottom", "front", "rear", "inner", "outer", etc., which are merely for convenient description of the present application, rather than indicating or implying that a device referred to needs to have a particular orientation or be constructed and operated in a particular orientation, and therefore cannot be construed as limiting the scope of protection of the present application.

A battery cell may include a lithium-ion secondary battery, a lithium-ion primary battery, a lithium-sulfur battery, a sodium/lithium ion battery, a sodium-ion battery or a magnesium-ion battery, etc., which is not limited by the embodiments of the present application. The battery cell may be in a cylindrical shape, a flat shape, a cuboid shape or in another shape, which is not limited by the embodiments of the present application. The battery cells are generally classified into three types depending on the way of packaging: cylindrical battery cells, prismatic battery cells and pouch battery cells, which are also not limited in the embodiments of the present application.

An existing battery cell generally includes a shell and an electrode assembly received in the shell, and the interior of the shell is filled with an electrolyte. The electrode assembly is mainly formed by stacking or winding a first electrode plate and a second electrode plate that have opposite polarities, and a separator is generally provided between the first electrode plate and the second electrode plate. The portions of the first electrode plate and the second electrode plate that are coated with an active material form a main body portion of the electrode assembly, and the portions of the first electrode plate and the second electrode plate that are not coated with the active material respectively form a first tab and a second tab. In a lithium-ion battery, the first electrode plate may be a positive electrode plate, which includes a positive electrode current collector and positive electrode active material layers provided on two sides of the positive electrode current collector, wherein the material of the positive electrode current collector may be, for example, aluminum, and a positive electrode active material may be, for example, lithium cobalt oxide, lithium iron phosphate, ternary lithium or lithium manganate, etc.; and the second electrode plate may be a negative electrode plate, which includes a negative current collector and negative electrode active material layers provided on two sides of the negative current collector, wherein the material of the negative current collector may be, for example, copper, and a negative electrode active material may be, for example, graphite or silicon, etc. The first tab and the second tab may jointly be located at one end of the main body portion or respectively at two ends of the main body portion. During the charging and discharging of the battery cell, the positive electrode active material and the negative electrode active material react with the electrolyte, and the tabs are connected to a terminal to form a current loop.

In processing and assembly procedures of the electrode assembly, if the electrode plates are welded after being wound, a gap between adjacent tabs is large, causing the whole to be relatively loosely arranged, and a spurious joint and a burst-point phenomenon will occur during laser welding, so it is often necessary to flatten the tabs such that the tabs are bent and deformed and the adjacent tabs are more compact, facilitating connection of the tabs to the terminal and assembly of the battery cell. In order to facilitate the application of an external force to the tabs in a circumferential direction of the electrode assembly for flattening, the tab is generally designed to continuously extend along the entire winding length of the tab.

The inventor of the present application has found in practice that the flattening treatment of the tabs causes end portions of two adjacent tab layers in a laminated structure to abut together and to form a closed structure, and such a closed structure impedes, to some extent, a passage of the electrolyte from a space outside the tabs to the main body portion, thereby adversely affecting an infiltration effect of the electrolyte in the electrode assembly on the active material, resulting in the phenomenon that the positive or negative electrode active material cannot sufficiently participate in reaction, possibly affecting the efficiency of the electrode assembly, and thus affecting the battery performance.

Therefore, the infiltration effect of the electrolyte in the electrode assembly on the active material is an important factor for ensuring the high performance of a battery. The inventor intends to improve the infiltration effect by changing a material of the separator or a hierarchical structure of the separator, but this change leads to an increase in the cost of the electrode assembly and a more complicated manufacturing process.

Another idea is that a continuous tab is die-cut to form a plurality of discrete tabs, and a stack of tabs are formed after winding, wherein the tab has a tab region and a non-tab region in the circumferential direction of the electrode assembly after the tab is flattened, the non-tab region facilitates infiltration of the electrolyte, and the tab region is used for connection to a terminal. However, there is a crumpling phenomenon after the tab is die-cut and then flattened, and due to the soft material of the tab, a self-supporting effect cannot be formed at a root portion of the tab when a circumferential acting force is applied for flattening the tab, making a flattened region not flat enough and affecting a subsequent welding effect; moreover, particles generated during tab welding are liable to fall between the electrode plates in the non-tab region.

On the basis of the findings of the above-mentioned problem, the inventor of the present application has improved the structural design of the electrode assembly, so as to increase the infiltration effect of the electrolyte in the electrode assembly on the active material and to enhance the performance of the battery. Various embodiments of the present application will be further described below with reference to the accompanying drawings.

A power consuming device includes a battery for supplying electric energy to a device, and may be a mobile phone, a portable apparatus, a laptop, an electric motorcycle, an electric vehicle, a ship, a spacecraft, an electric toy, or an electric tool, etc. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer.

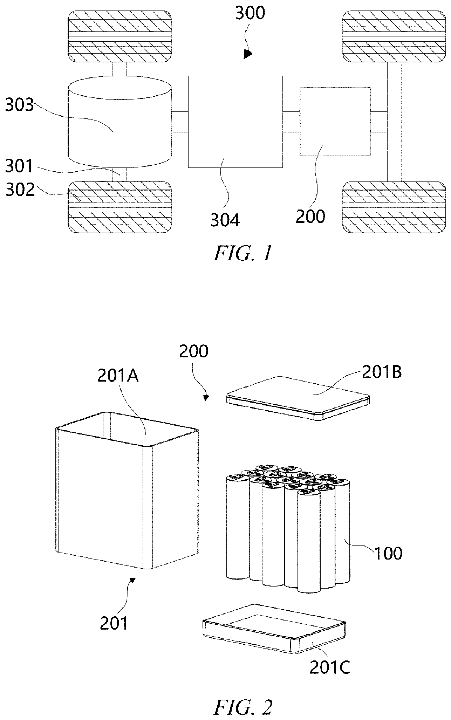

As shown in Fig. 1, a power consuming device may be a vehicle 300, for example, a new energy vehicle. The new energy vehicle may be a battery electric vehicle, a hybrid electric vehicle, an extended-range electric vehicle, or the like; alternatively, the power consuming device may also be an unmanned aerial vehicle, a ship, or the like. Specifically, the vehicle 300 may include an axle 301, wheels 302 connected to the axle 301, a motor 303, a controller 304 and a battery 200, wherein the motor 303 is used for driving the axle 301 to rotate, the controller 304 is used for controlling operation of the motor 303, and the battery 200 may be provided at the bottom, head, or tail of the vehicle 300, and used for providing electric energy for operation of the motor 303 and other components in the vehicle.

As shown in Fig. 2, the battery 200 includes a case 201 and a battery cell 100. In the battery 200, one or more battery cells 100 may be provided. If a plurality of battery cells 100 are provided, the plurality of battery cells 100 may be in series connection, in parallel connection or in series-parallel connection, and the series-parallel connection refers to that the plurality of battery cells 100 are in series and parallel connection. It is possible that the plurality of battery cells 100 are firstly connected in series or in parallel or in series and parallel to form a battery module, and then a plurality of battery modules are connected in series or in parallel or in series and parallel to form a whole body and are received in the case 201. It is also possible that all the battery cells 100 are directly connected in series or in parallel or in series and parallel, and then the whole body composed of all the battery cells 100 is received in the case 201.

The case 201 is hollow inside and used for receiving one or more battery cells 100, and the case 201 may also be sized in different shapes according to the shape, number, combination manner and other requirements of the received battery cells 100. For example, the case 201 may include: a receiving portion 201A, a first cover body 201B and a second cover body 201C, wherein two opposite ends of the receiving portion 201A both have openings, and the first cover body 201B and the second cover body 201C are respectively used for closing the openings at two ends of the receiving portion 201A. In Fig. 2, the receiving portion 201A is of a rectangular cylindrical structure according to the arrangement manner of the plurality of battery cells 100.

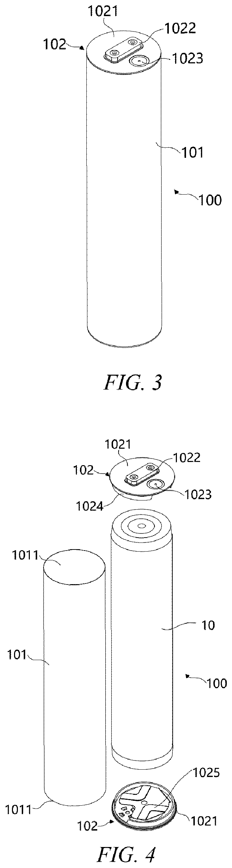

As shown in Fig. 3, the battery cell 100 includes a shell 101, an end cap assembly 102, and an electrode assembly 10. The battery cell 100 may include, for example, a lithium-ion secondary battery, a lithium-ion primary battery, a lithium-sulfur battery, a sodium/lithium ion battery, or a magnesium-ion battery, etc.

The shell 101 has a hollow structure for receiving the electrode assembly 10, and the shell 101 has an opening 1011; and the end cap assembly 102 is used for closing the opening 1011, the end cap assembly 102 includes an end cap body 1021 and a terminal 1022 provided on the end cap body 1021, and the end cap body 1021 is further provided with a pressure relief component 1023 for pressure relief when an internal pressure of the battery cell 100 exceeds a preset pressure.

Fig. 3 illustrates an embodiment in which only one electrode assembly 10 is provided, and those skilled in the art will appreciate that in other embodiments, the battery cell 100 may also include a plurality of electrode assemblies 10, and the terminals 1022 may also be designed according to the number and arrangement manner of the electrode assemblies 10. Furthermore, depending on the shape and placement manner of the electrode assemblies 10, as well as the combination manner of the plurality of electrode assemblies 10, the shell 101 may be in a cylindrical shape, a flat shape, a cuboid shape, or in another shape.

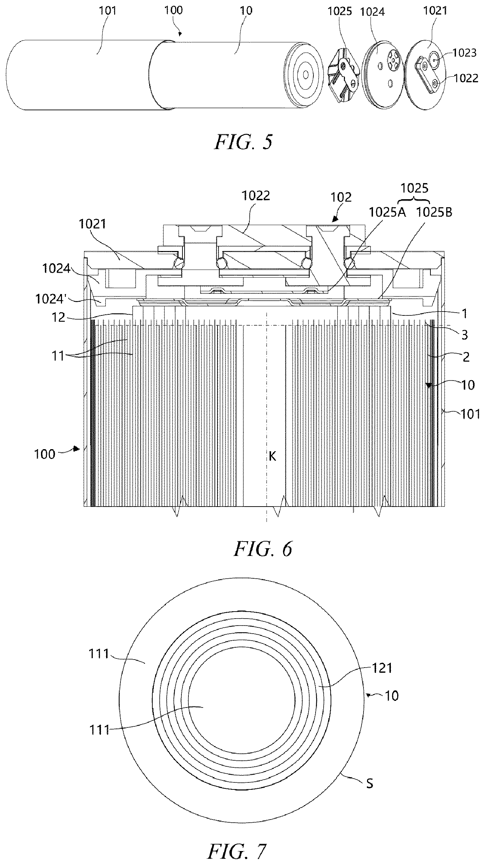

As shown in Fig. 4, the electrode assembly 10 is provided in the shell 101, a first electrode plate and a second electrode plate that have opposite polarities each have a tab 12, and the tab 12 of the first electrode plate or the tab 12 of the second electrode plate is electrically connected to the terminal 1022. The end cap assembly 102 may further include an adapter 1025, wherein the adapter 1025 is provided between the end cap body 1021 and the electrode assembly 10 and used for achieving electrical connection between the tab 12 and the terminal 1022. As shown in Fig. 5, in order to achieve insulation between the end cap body 1021 and the adapter 1025, the end cap assembly 102 may further include an insulator 1024 provided between the end cap body 1021 and the adapter 1025.

In the embodiments shown in Figs. 4 and 5, the shell 101 of the battery cell 100 is in the shape of a hollow cylinder with two ends both having openings 1011, and the two openings 1011 are both closed by the end cap assemblies 102. The electrode assembly 10 can be put into the shell 101 from the opening 1011, the first electrode plate and the second electrode plate are wound to form a cylindrical electrode assembly 10, and the respective tabs 12 of the first electrode plate and the second electrode plate are respectively led out of two ends of the electrode assembly 10 in an axial direction, and are both electrically connected to the terminals 1022 at the corresponding ends via the adapters 1025.

In other optional embodiments, the shell 101 of the battery cell 100 is in the shape of a hollow cylinder with one end being closed and with the other end having the opening 1011 and being closed by the end cap assembly 102, the first electrode plate and the second electrode plate are wound to form a cylindrical electrode assembly 10, the respective tabs 12 of the first electrode plate and the second electrode plate are respectively led out of the two ends of the electrode assembly 10 in an axial direction, the tab 12 of the first electrode plate, for example, a negative electrode plate, is electrically connected to the terminal 1022 via the adapter 1025, and the tab 12 of the second electrode plate, for example, a positive electrode plate, is directly electrically connected to an end wall of the shell 101.

The structure of the electrode assembly 10 will be described in detail below.

In some embodiments, as shown in Figs. 6 to 11, the electrode assembly 10 is used for the battery cell 100. The electrode assembly 10 includes: a first electrode plate 1 and a second electrode plate 2 that have opposite polarities, wherein the first electrode plate 1 and the second electrode plate 2 each include a main body portion 11 and a tab 12 projecting from the main body portion 11, and the first electrode plate 1 and the second electrode plate 2 are wound about a winding axis K such that the respective main body portions 11 form a wound main body S.

An end portion of the wound main body S includes at least one conductive region 121 and at least one liquid guiding region 111, wherein the tab 12 is led out of the conductive region 121, is wound by at least one turn, and is used for electrical connection to the terminal 1022 of the battery cell 100; and the liquid guiding region 111 is arranged adjacent to the conductive region 121 in a radial direction of the wound main body S and is used for guiding an electrolyte to flow into the interior of the wound main body S.

The first electrode plate 1 and the second electrode plate 2 are substantially the same in shape, and can have elongated strip-like structures; the first electrode plate 1 and the second electrode plate 2 are superposed in a direction perpendicular to the winding axis K; and the formed wound main body S may be in a cylindrical shape, a flat shape, a cuboid shape, or in another shape. For example, the first electrode plate 1 is a positive electrode plate, and the second electrode plate 2 is a negative electrode plate; alternatively, the first electrode plate 1 is a negative electrode plate, and the second electrode plate 2 is a positive electrode plate. The electrode assembly 10 further includes a separator 3, wherein the separator 3 is used for separating the first electrode plate 1 from the second electrode plate 2; and the separator 3, the main body portion 11 of the first electrode plate 1 and the main body portion of the second electrode plate 2 are wound to form a wound main body S.

Optionally, one end portion of the wound main body S includes at least one conductive region 121 and at least one liquid guiding region 111, and the tab 12 is led out of the conductive region 121 and is wound by at least one turn, such that both the conductive region 121 and the liquid guiding region 111 form an annular structure; and the tab 12 is flattened to form a bent portion, and is electrically connected to the terminal 1022 of the battery cell 100 via the bent portion, for example, in a welding manner. In an unwound state of the first electrode plate 1 or the second electrode plate 2, the tab 12 may be provided in a middle region, an end region or another region of the electrode plate.

The liquid guiding region 111 is not provided with the tab 12, and a gap between the first electrode plate 1 or the second electrode plate 2 and the separator 3 is in communication with the outside of the electrode assembly 10, so that it is easier for the electrolyte to enter the gap between the first electrode plate 1 or the second electrode plate 2 and the separator 3 and to flow into the interior of the wound main body S; and the separator 3 can also fully play a liquid absorption effect to make the electrolyte sufficiently react with active materials on the first electrode plate 1 and the second electrode plate 2 during charging and discharging of the battery.

Optionally, two end portions of the wound main body S each include at least one conductive region 121 and at least one liquid guiding region 111, and the electrolyte can infiltrate from the liquid guiding regions 111 at the two ends of the wound main body S to the interior, so that an infiltration path of the electrolyte can be shortened, and the liquid absorption effect can be improved.

In the embodiment of the present application, the end portion of the wound main body S simultaneously has the conductive region 121 and the liquid guiding region 111. Since no tab 12 is provided in the liquid guiding region 111, after the tab 12 of the conductive region 121 is flattened, the electrolyte in the battery cell 100 also easily flows into the interior of the wound main body S through the gap between the first electrode plate 1 and the second electrode plate 2 in the liquid guiding region 111, ensuring the infiltration performance of the electrode assembly 10, so that the electrolyte can sufficiently react with the active materials on the first electrode plate 1 and the second electrode plate 2 during charging and discharging of the battery, and the performance of the battery cell 100 is thus optimized.

Furthermore, since the tab 12 extends continuously and is wound by at least one turn in the conductive region 121, the tab has better connection strength with the main body portion 11 in a circumferential direction, such that a root portion of the tab 12 has a better self-supporting effect, a crumpling phenomenon of the tab 12 is prevented in the process of flattening the tab 12 by applying a circumferential acting force, the shape of a flattened region is stabilized, the effect of welding the tab 12 and the terminal 1022 is optimized, it is ensured that the electrode assembly 10 reliably transmits electric energy outwards, and the overcurrent capacity is improved. In addition, particles generated during welding of the tab 12 are less prone to dropping between the first electrode plate 1 and the second electrode plate 2 of the liquid guiding region 111 in the circumferential direction, so that the working reliability of the electrode assembly 10 can be improved, and the problem of short circuit or scratch of the electrode plate can be solved.

Moreover, by providing the continuous tab 12 on part of a winding length of the main body portion 11, the overcurrent capacity of the tab 12 can be satisfied without providing discrete tabs 12 on the entire winding length of the main body portion 11, so that a process of die-cutting an electrode plate can be simplified, and meanwhile, when the first electrode plate 1 and the second electrode plate are wound to form the wound main body S, there is also no need to perform alignment of the tabs 12, thus the process can be simplified, and the production efficiency of the electrode assembly 10 can be increased.

In some embodiments, as shown in Figs. 6 to 11, the tab 12 is wound by a plurality of turns in the conductive region 121. The tab 12 may be wound by at least two turns, for example, at least five turns in order to achieve a preferred self-supporting effect of the tab 12. The number of the winding turns may be designed on the basis of the overcurrent capacity and polarization of the electrode assembly 10.

In the embodiment of the present application, the supporting effect on the tab 12 is further strengthened by winding the tab 12 by a plurality of turns in the conductive region 121 and making the bent portions of adj acent tabs 12 overlapped with each other after flattening, so that the tab 12 can be prevented from being crumpled during flattening, the shapes of the bent portions can be stable, and the effect of welding the tab 12 and the terminal 1022 can be optimized; in addition, the welding area of the tab 12 and the terminal 1022 after flattening can also be increased, so that the tab 12 and the terminal 1022 can be welded more firmly, it is ensured that the electrode assembly 10 reliably transmits electric energy outwards, and the overcurrent capacity is improved.

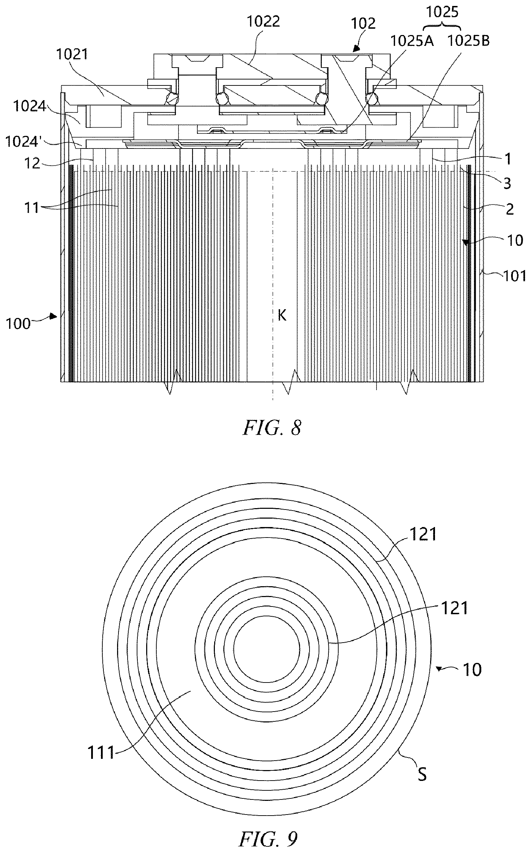

In some embodiments, the sum of the number of the conductive regions 121 and the number of the liquid guiding regions 111 is greater than or equal to three, and the regions are alternately provided in the radial direction of the wound main body S. As shown in Figs. 6 and 7, one conductive region 121 is provided, and two liquid guiding regions 111 are provided. As shown in Figs. 8 and 9, two conductive regions 121 are provided, and one liquid guiding region 111 is provided.

In this embodiment of the present application, by alternately providing at least three conductive regions 121 and at least three liquid guiding regions 111 in the radial direction of the wound main body S, the electrolyte entering the interior of the wound main body S from the liquid guiding regions 111 can more easily reach the conductive regions 121, which facilitates rapid infiltration of the electrolyte; also, this structure can shorten a transmission distance of electrons from the liquid guiding region 111 to the conductive region 121, ensure the timely and effective transmission of electrons, improve the uniformity of current distribution, and solve the polarization problem of the electrode assembly 10.

In some embodiments, as shown in Fig. 6 and Fig. 7, the conductive region 121 is located in the middle region of the end portion of the wound main body S in the radial direction, and a liquid guiding region 111 is provided on either side of the conductive region 121 in the radial direction.

The term "middle region" mentioned herein is not intended to exactly indicate that the conductive region is directly located at a middle position in the radial direction, and it falls within the scope of protection of the present application that the conductive region 121 is located relatively inwards or outwards in the radial direction.

In this embodiment of the present application, a liquid guiding region 111 is provided on either side of the conductive region 121 in the radial direction, and the electrolyte can simultaneously enter the interior of the wound main body S via the two liquid guiding regions 111 and permeates into the portions of the first electrode plate 1 and the second electrode plate 2 located in the conductive region 121, so that the infiltration performance of the electrolyte of the electrode assembly 10 can be further enhanced. Furthermore, the transmission distance of the electrons from an inner-layer liquid guiding region 111 and an outer-layer liquid guiding region 111 to the conductive region 121 is shortened, so that the uniformity of current distribution can be improved, and the polarization problem can be solved. Moreover, one conductive region 121 is provided to facilitate electrical connection of the tab 12 and the terminal 1022. All of the above advantages can enhance the performance of the battery.

In some embodiments, as shown in Figs. 8 and 9, at least one of the first electrode plate 1 and the second electrode plate 2 is provided with a plurality of tabs 12 at intervals in a winding direction, so as to form a plurality of radially spaced conductive regions 121 at the end portion of the wound main body S.

In an extending direction of the winding axis K, one side of the main body portion 11 of at least one of the first electrode plate 1 and the second electrode plate 2 is provided with two or more tabs 12 at intervals, each tab 12 forms a conductive region 121 at the end portion of the wound main body S, and the conductive regions 121 and the liquid guiding regions 111 are alternately arranged at intervals in the radial direction. For example, the number of segments of the tabs 12 may not exceed 10 depending on the length of the electrode plate. In this embodiment of the present application, the electrolyte entering the interior of the wound main body S via the liquid guiding region 111 is allowed to simultaneously permeate into the conductive regions 121 on two sides, so that the electrolyte smoothly reaches the portions of the first electrode plate 1 and the second electrode plate 2 located in the conductive region 121, and the infiltration performance of the electrolyte of the electrode assembly 10 is enhanced. Moreover, the electrons can simultaneously reach the conductive region 121 from an inner side and an outer side of the liquid guiding region 111 in the radial direction, so that the transmission distance of the electrons can be greatly shortened, the uniformity of current distribution can be improved, and the polarization problem can be solved; when the first electrode plate 1 and the second electrode plate 2 are longer after being unwound, the polarization problem caused by the long local transmission distance of the electrons can be better solved by designing segmented tabs 12. Furthermore, by providing the plurality of conductive regions 121, the overall length of the tab 12 provided in the radial direction can be increased to facilitate welding of the tab 12 and the adapter 1025, and the tab is electrically connected to the terminal 1022 by means of the adapter 1025. All of the above advantages can enhance the performance of the battery.

In some embodiments, as shown in Fig. 8 and Fig. 9, two conductive regions 121 are provided and respectively located on the inner side and the outer side of the end portion of the wound main body S in the radial direction, and the liquid guiding region 111 is located between the two conductive regions 121.

Due to different infiltration speeds of the electrode assembly 10 at different positions, for example, the electrolyte relatively easily infiltrates into the portions of the electrode assembly 10 closest to an inner ring and an outer ring; there is an electrolyte flow of a central tube in the inner ring, the outer ring is in contact with the electrolyte in the gap between the shell 101 and the electrode assembly 10, so that the electrolyte more easily infiltrates into the inner and outer rings of the electrode assembly 10 than that into the middle region.

In this embodiment of the present application, the two conductive regions 121 are provided in a non-infiltration bottleneck region, for example, the inner ring and the outer ring of the electrode assembly 10, so that the infiltration effect can be optimized, and the polarization problem can also be solved.

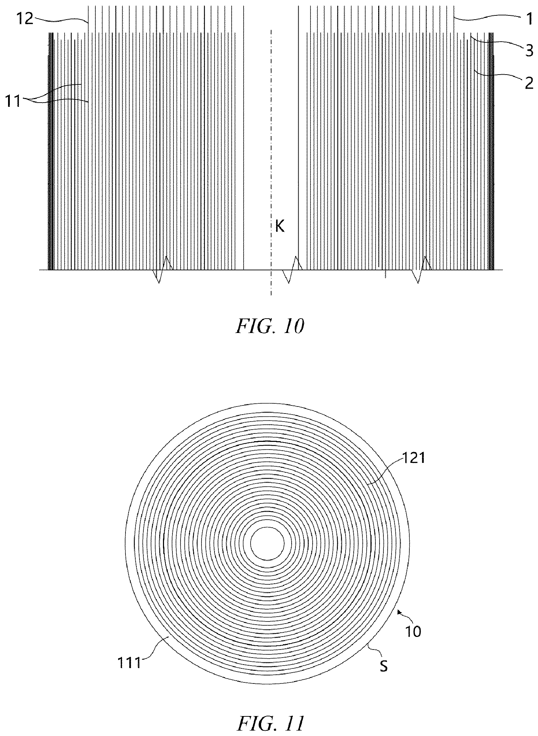

In some embodiments, as shown in Figs. 10 and 11, one conductive region 121 and one liquid guiding region 111 are respectively provided, and the conductive region 121 is located on the inner side of the conductive region 111 in the radial direction. For example, a radial width of the conductive region 121 may be greater than that of the liquid guiding region 111 so as to improve the overcurrent capability of the electrode assembly 10.

In this embodiment of the present application, the conductive region 121 is provided on the inner side of the liquid guiding region 111, and on the basis of ensuring an infiltration characteristic of the electrode assembly 10 by means of the liquid guiding region 111, the tab 12 can also be prevented from being in contact with an inner wall of the shell 101 after the tab is flattened to form the bent portion, or the particles can be prevented from falling onto the inner side wall of the shell 101 when the tab 12 and the terminal 1022 are welded, so as to avoid short circuit and improve the working safety of the battery cell 100.

In some embodiments, the liquid guiding regions 111 at the two ends of the wound main body S have the same radial dimension, and the conductive regions 121 at the two ends of the wound main body have the same radial dimension. The respective tabs 12 of the first electrode plate 1 and the second electrode plate 2 are led out of the two ends of the wound main body S, the two ends of the wound main body S are both provided with the conductive regions 121 and the liquid guiding regions 111, and the "radial dimension" includes a radial position and a radial size.

In this embodiment of the present application, the two ends of the wound main body S are structurally symmetrical, so that the first electrode plate 1 and the second electrode plate 2 can be processed to have the same structure, the processing difficulty of the electrode assembly 10 can be reduced, and the production efficiency of the electrode assembly 10 can be increased.

In some other embodiments, the liquid guiding region 111 at one end of the wound main body S has the same radial dimension as the conductive region 121 at the other end. The respective tabs 12 of the first electrode plate 1 and the second electrode plate 2 are led out of the two ends of the wound main body S, the two ends of the wound main body S are both provided with the conductive regions 121 and the liquid guiding regions 111, and the "radial dimension" includes a radial position and a radial size.

In this embodiment of the present application, the conductive regions 121 and the liquid guiding regions 111 at the two ends of the wound main body S are provided in a staggered manner in the radial direction, namely, the conductive region 121 at one end of the wound main body S corresponds to the liquid guiding region 111 at the other end, such that the wound main body S has the liquid guiding region 111 at any position in the radial direction, the electrolyte is allowed to enter the interior of the wound main body S more quickly and sufficiently, the distribution of the electrolyte in the interior of the electrode assembly 10 is more uniform, which makes the electrolyte uniformly react with the active materials on the first electrode plate 1 and the second electrode plate 2 during the charging and discharging of the battery, and the performance of the battery cell 100 is thus optimized.

In some embodiments, as shown in Figs. 6, 8 and 10, the electrode assembly 10 further comprises a separator 3, wherein the separator 3 is used for separating the first electrode plate 1 from the second electrode plate 2; and the separator 3, the main body portion 11 of the first electrode plate 1 and the main body portion of the second electrode plate 2 are wound to form a wound main body S; in the extending direction of the winding axis K, the portion of at least one side of the separator 3 located in the liquid guiding region 111 extends beyond a side edge of the main body portion 11 of the first electrode plate 1 and beyond a side edge of the main body portion 11 of the second electrode plate 2.

The separator 3 may have an elongated strip-like structure in an unwound state, and the separator 3 may be made from a polypropylene (PP) material or a polyethylene (PE) material, and the interior thereof has micro or nano-scale pores for allowing metal ions to pass through during the charging and discharging of the battery.

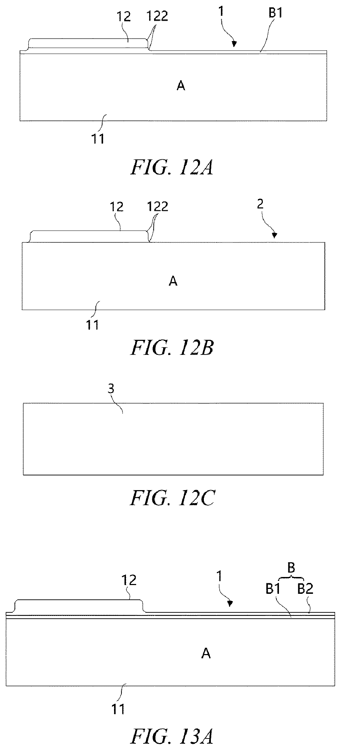

Optionally, in the extending direction of the winding axis K, the portion of one side of the separator 3 located in the liquid guiding region 111 extends beyond the side edge of the main body portion 11 of the first electrode plate 1 and beyond the side edge of the main body portion 11 of the second electrode plate 2; alternatively, as shown in Fig. 13A, the portions of two sides of the separator 3 located in the liquid guiding region 111 extend beyond the side edge of the main body portion 11 of the first electrode plate 1 and beyond the side edge of the main body portion 11 of the second electrode plate 2.

In this embodiment of the present application, the separator 3 is designed to be in a stepped shape and is widened in the liquid guiding region 111, so that a side edge of the separator 3 extends outwards between the first electrode plate 1 and the second electrode plate 2 in the liquid guiding region 111 and is soaked in the electrolyte to allow the separator 3 to more easily absorb the electrolyte under a capillary action, the infiltration performance of the electrode assembly 10 is enhanced, and the performance of the battery cell 100 is thus enhanced. Optionally, as shown in Fig. 12A, the separator 3 may also be designed to have an elongated equal-width structure.

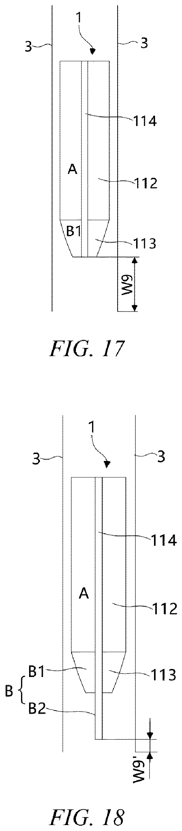

In some embodiments, as shown in Fig. 13A, the electrode assembly 10 further includes a separator 3, wherein the separator 3 is used for separating the first electrode plate 1 from the second electrode plate 2, and the main body portion 11 of at least one of the first electrode plate 1 and the second electrode plate 2 includes an active material region A and a flow guiding region B provided side by side in the extending direction of the winding axis K, the flow guiding region B being located on an outer side of the active material region A and used for guiding the electrolyte into the interior of the wound main body S; as shown in Figs. 17 and 18, a gap between the surface of the main body portion 11 located in the flow guiding region B and the separator 3 is greater than a gap between the surface of the main body portion 11 located in the active material region A and the separator 3.

For example, the first electrode plate 1 is a positive electrode plate, and the active material region A is coated with a positive electrode active material, for example, the positive electrode active material may be a ternary material, lithium manganate or lithium iron phosphate; and the second electrode plate 2 is a negative electrode active material, which may be graphite or silicon.

In this embodiment of the present application, the gap between the surface of the main body portion 11 located in the flow guiding region B and the separator 3 is set to be greater than the gap between the surface of the main body portion 11 located in the active material region A and the separator 3, so that a larger capillary gap can be formed between the flow guiding region B and the separator 3, and after the electrolyte is absorbed into an end portion of the separator 3, the electrolyte can rapidly enter the end portion of the wound main body S and then further enter the active material region A to react with the active material. This structure allows the gap between the main body portion 11 and the separator 3 to be gradually decreased from outside to inside, facilitating rapid entry of the electrolyte.

In some embodiments, as shown in Fig. 12A, the flow guiding region B of at least one of the first electrode plate 1 and the second electrode plate 2 includes an infiltration region B1 adjacent to the active material region A, with the gap between the surface of the main body portion 11 located in the infiltration region B1 and the separator 3 being gradually increased from inside to outside in the extending direction of the winding axis K.

The infiltration region B1 may have an elongated strip-like structure extending in the entire winding direction of the main body portion 11 and be used for introducing the electrolyte, and the width of the infiltration region B1 in the extending direction of the winding axis K is smaller than that of the active material region A. As shown in Figs. 17 and 18, the surface of the infiltration region B1 in the extending direction of the winding axis K may be an inclined plane, or may be designed to be in an arc shape, a stepped shape, etc., so long as the gap between the surface of the infiltration region B1 and the separator 3 being gradually increased from inside to outside falls within the scope of protection of the present application.

In this embodiment of the present application, it is possible to introduce the electrolyte into the active material region A via the infiltration region B1 after the electrolyte is absorbed at the end portion of the separator 3, facilitating rapid entry of the electrolyte into the interior of the wound main body S for reaction.

In some embodiments, as shown in Figs. 17 and 18, the flow guiding region B of at least one of the first electrode plate 1 and the second electrode plate 2 includes the infiltration region B1 adjacent to the active material region A. The main body portion 11 of at least one of the first electrode plate 1 and the second electrode plate 2 includes a current collector 114, an active material layer 112 and an infiltration layer 113, wherein the active material layer 112 is provided on a surface of the current collector 114 and located in the active material region A, the infiltration layer 113 is provided on the surface of the current collector 114 and located in the infiltration region B1, and the infiltration layer 113 has a higher liquid absorption capacity than the active material layer 112.

The term "liquid absorption capacity" refers to the capability of a coating layer per unit area to absorb an electrolyte per unit time. For example, the first electrode plate 1 is a positive electrode plate and may use an aluminum foil as the current collector 114, and the second electrode plate 2 is a negative electrode plate and may use a copper foil as the current collector 114. For example, the infiltration layer 113 includes an inorganic ceramic coating, a high molecular polymer, and a binder. As shown in Fig. 17, a side edge of the infiltration layer 113 is flush with a side edge of the current collector 114, and the side edge of the separator 3 adjacent to the first electrode plate 1 extends beyond the side edges of the infiltration layer 113 and the current collector 114.

In this embodiment of the present application, by coating the region of the main body portion 11 close to the outer side with the infiltration layer 113 having the higher liquid absorption capacity than the active material layer 112, the capability of absorbing the electrolyte by the end portion of the wound main body S can be improved by using the material characteristic of the infiltration layer 113 so as to facilitate rapid absorption of the electrolyte into the interior of the wound main body S.

Moreover, the gap between the surface of the main body portion 11 located in the infiltration region B1 and the separator 3 is gradually increased from inside to outside, namely, the thickness of the infiltration layer 113 is less than that of the active material layer 112, and a gap gradually expanded from inside to outside is formed between the infiltration layer 113 and the separator 3 and also facilitates the absorption of the electrolyte. By improving both the structural design and material characteristic, the infiltration characteristic of the electrode assembly 10 can be better improved.

In some embodiments, as shown in Figs. 13A, 14A, 14B, and 18, the flow guiding region B of at least one of the first electrode plate 1 and the second electrode plate 2 further includes a guide region B2, wherein the region of the current collector 114 beyond the infiltration layer 113 in the extending direction of the winding axis K forms the guide region B2.

The guide region B2 is a region of the current collector 114 beyond the infiltration layer 113 in the extending direction of the winding axis K, the region is not provided with a coating layer, and the portion of the current collector 114 located in the guide region B2 is integrally connected to the tab 12. The side edge of the separator 3 adjacent to the first electrode plate 1 is beyond the side edge of the current collector 114 such that the electrolyte is absorbed by means of the separator 3 and then enters the active material region A via the guide region B2 and the infiltration region B1 in sequence.

In this embodiment of the present application, the coating layer is not provided in the guide region B2, so that the gap between the current collector 114 and the separator 3 in the guide region B2 is greater than the gap between the surface of the infiltration layer 113 and the separator 3, and a multi-stage electrolyte absorption channel can be formed at the end portion of the wound main body S located in the liquid guiding region 111. Also, the distance between the first electrode plate 1 or the second electrode plate 2 and the separator 3 is gradually decreased from the guide region B2, the infiltration region B1 to the active material region A, so that the liquid absorption efficiency can be significantly increased, and the infiltration characteristic of the electrode assembly 10 can be improved, and thus the performance of the battery cell 100 can be enhanced.

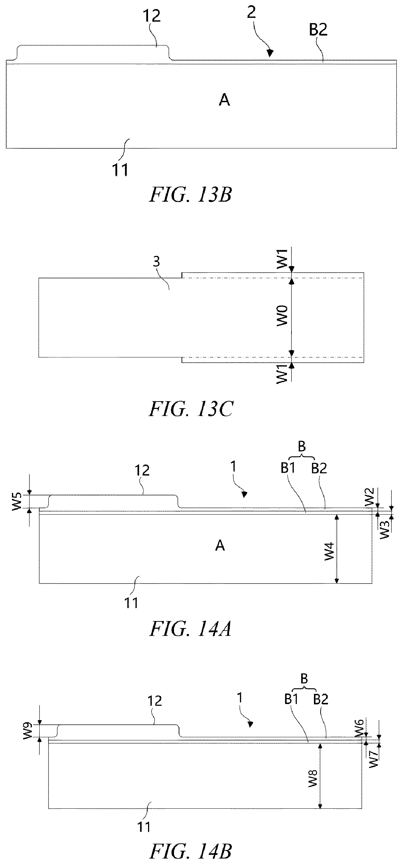

In some embodiments, as shown in Fig. 13A, the first electrode plate 1 is a positive electrode plate and is sequentially provided with an active material region A, an infiltration region B1 and a guide region B2 from inside to outside in the extending direction of the winding axis K; and as shown in Fig. 13B, the second electrode plate 2 is a negative electrode plate and is sequentially provided with an active material region A and a guide region B2 from inside to outside along the winding axis K.

In this embodiment of the present application, considering that the compaction density of the positive electrode plate is relatively high and the speed of the electrolyte entering the positive electrode plate is relatively low, the speed of the electrolyte permeating into the positive electrode active material can be increased by adding the infiltration region B1 to the positive electrode plate; and the speed of the electrolyte entering the negative electrode plate is higher than that of the electrolyte entering the positive electrode plate, and by introducing the electrolyte only via the guide region B2, a manufacturing process of the negative electrode plate can be simplified. In this embodiment, the speeds of the electrolyte entering the positive electrode plate and the negative electrode plate can be similar, and the production difficulty of the electrode assembly 10 can also be reduced. Optionally, the first electrode plate 1 and the second electrode plate 2 may also be provided with the same structure, for example, the electrode plates are both provided with the infiltration region B 1, or both not provided with the infiltration region B 1.

In some embodiments, the side edge of the separator 3 located in the liquid guiding region 111 of at least one of the first electrode plate 1 and the second electrode plate 2 is located between an outer side edge of the flow guiding region B and an outer side edge of the tab 12.

In this embodiment of the present application, the side edge of the separator 3 is provided beyond the outer side edge of the flow guiding region B, so that the extending portion of the separator 3 can be soaked in the electrolyte so as to absorb the electrolyte under the capillary action; also, the side edge of the separator 3 is not beyond the outer side edge of the tab 12, so that excessive extension of the separator 3 in the conductive region 121 can be prevented from affecting the flattening of the tab 12, and the conductive effect of the tab 12 can be ensured.

In some embodiments, as shown in Figs. 12A to 16, the flow guiding region B is consistent with the active material region A in extension length in a circumferential direction of the wound main body S.

In this embodiment of the present application, the manufacturing difficulty of the electrode plate provided with the flow guiding region B can be reduced, and the flow guiding region is consistent with the active material region A in extension length, so that the electrolyte can be better guided to reach the active material region A over the whole coating length of the active material region A, the electrolyte can be uniformly distributed over the whole winding length of the electrode plate, and the performance of the battery cell 100 can be thus enhanced.

In part of the embodiment described above, the specific structure of the electrode plate is introduced by taking the first electrode plate 1 as an example, and the second electrode plate 2 may also use the same or similar structure.

Some specific embodiments will be given below to illustrate the structure of the electrode assembly 10.

In a first embodiment, as shown in Figs. 6 and 7, Fig. 6 only shows a structure of one end of the battery cell 100, and a structure of the other end may be symmetrical to one end embodied in the figures. The electrode assembly 10 is provided in the shell 101, and the end portion of the shell 101 is provided with the opening 1011 and is closed by the end cap assembly 102, the end cap assembly 102 including the end cap body 1021, the terminal 1022, the insulator 1024 and the adapter 1025. The insulator 1024 is provided on the side of the end cap body 1021 close to the electrode assembly 10, and the adapter 1025 is provided on the side of the insulator 1024 close to the electrode assembly 10.

The electrode assembly 10 includes the first electrode plate 1, the second electrode plate 2 and the separator 3, wherein the first electrode plate 1 and the second electrode plate 2 are stacked, the separator 3 is used for separating the first electrode plate 1 from the second electrode plate 2, and the first electrode plate 1, the second electrode plate 2 and the separator 3 are wound together, so that the respective main body portions 11 of the first electrode plate 1 and the second electrode plate 2 form the wound main body S; and the end portion of the wound main body S is concentrically provided with one conductive region 121 and two liquid guiding regions 111, and the conductive region 121 is located between the two liquid guiding regions 111. The tab 12 is led out of the conductive region 121 and is wound by a plurality of turns, for example, six turns, and the tab 12 is flattened to form the bent portion, and is electrically connected to the terminal 1022 at the same end via the adapter 1025. The tab 12 may be bent inwards in the radial direction to prevent the bent portion from touching the inner wall of the shell 101 and to facilitate reducing the radial dimension of the adapter 1025.

In the conductive region 121, the extension length of the first electrode plate 1 is the largest, followed by that of the separator 3, and the second electrode plate 2 extends to a horizontal dotted line; and in the liquid guiding region 111, the extension length of the separator 3 is the largest, the first electrode plate 1 and the second electrode plate 2 extend to the horizontal dotted line, and the first electrode plate 1 and the second electrode plate 2 are alternately provided.

As shown in Fig. 6, an outer ring of the insulator 1024 is provided with a projection portion 1024' for spacing the tab 12 from the shell 101 so as to enhance the insulation performance. For example, the adapter 1025 may include a first connecting piece 1025A and a second connecting piece 1025B that are connected to each other, wherein the first connecting piece 1025A is welded to the tab 12, and the second connecting piece 1025B is connected to the terminal 1022.

In a second embodiment, as shown in Figs. 8 and 9, the difference from the first embodiment lies in that the end portion of the wound main body S is concentrically provided with two conductive regions 121 and one liquid guiding region 111, and the liquid guiding region 111 is located between the two conductive regions 121. The tab 12 of each conductive region 121 is continuously wound by a plurality of turns, for example, five turns.

In a third embodiment, as shown in Figs. 10 and 11, the difference from the first embodiment lies in that the end portion of the wound main body S is concentrically provided with one conductive region 121 and one liquid guiding region 111, and the liquid guiding region 111 is located on the outer side of the conductive region 121 in the radial direction. For example, the radial width of the conductive region 121 is greater than that of the liquid guiding region 111.

Some specific embodiments will be given below to illustrate the structures of the first electrode plate 1, the second electrode plate 2 and the separator 3 that are unwound.

In the first embodiment, as shown in Fig. 12A, the first electrode plate 1 is a positive electrode plate, the main body portion 11 of the first electrode plate 1 includes the active material region A and the infiltration region B1 provided side by side in the extending direction of the winding axis K, and the infiltration region B1 is located on the outer side of the active material region A. As shown in Fig. 17, the current collector 114 may be coated with the active material layer 112 in the active material region A, and may be coated with the infiltration layer 113 in the infiltration region B 1; the infiltration layer 113 may have a higher liquid absorption performance than the active material layer 112; and the gap between the surface of the infiltration layer 113 and the separator 3 is gradually decreased from outside to inside and is larger than the gap between the active material layer 112 and the separator 3. The side edge of the separator 3 may have a width W9 beyond the side edge of the first electrode plate 1.

The tab 12 projects from a side portion of the main body portion 11 in the extending direction of the winding axis K, the tab 12 may be provided at a position close to one end of the main body portion 11 in the winding length, and after winding, the conductive region 121 may be located at the inner ring or the outer ring. The infiltration layer 113 extends in the entire winding length of the first electrode plate 1, and the outer side edge of the infiltration layer 113 located in the conductive region 121 may have a small part of width on the tab 12. A transitional portion 122 may be provided at the root portion of the tab 12 connected to the main body portion 11, for example, at a fillet angle or a chamfer, so as to decrease a stress applied to the root portion when the tab 12 is flattened, and to prevent the tab 12 from cracking or being pulled. Optionally, the corner of the outer side edge of the tab 12 may also be provided with the transitional portion 122. For example, a value of the fillet angle at the corner of the outer side edge of the tab 12 ranges from R3 to R12, and is preferably R8; and a value of the fillet angle at the connection to the main body portion 11 ranges from R1 to R8, and is preferably R5.

As shown in Fig. 12B, the second electrode plate 2 is a negative electrode plate, the main body portion 11 of the second electrode plate 2 includes only the active material region A, and the tab 12 may be provided at the position close to one end of the main body portion 11 in the winding length.

As shown in Fig. 12C, the separator 3 is in a rectangular elongated shape, and has an equal-width structure.

During winding, the respective tabs 12 of the first electrode plate 1 and the second electrode plate 2 are located on different sides in the extending direction of the winding axis K.

In the second embodiment, as shown in Fig. 13A, the first electrode plate 1 is a positive electrode plate, and the main body portion 11 of the first electrode plate 1 includes the active material region A, the infiltration region B1, and the guide region B2 provided side by side in the extending direction of the winding axis K, the infiltration region B1 being located between the active material region A and the guide region B2. The infiltration region B1 and the guide region B2 extend in the entire winding length of the first electrode plate 1.

As shown in Fig. 18, the current collector 114 may be coated with the active material layer 112 in the active material region A, and may be coated with the infiltration layer 113 in the infiltration region B1; the infiltration layer 113 may have a higher liquid absorption performance than the active material layer 112; and the gap between the surface of the infiltration layer 113 and the separator 3 is gradually decreased from outside to inside and is larger than the gap between the active material layer 112 and the separator 3. The side edge of the separator 3 may have a width W9' beyond the side edge of the guide region B2.

The tab 12 projects from the side portion of the main body portion 11 in the extending direction of the winding axis K, the tab 12 may be provided at one end of the main body portion 11, and after winding, the conductive region 121 may be located at the inner ring or the outer ring.

As shown in Fig. 13B, the second electrode plate 2 is a negative electrode plate, the main body portion 11 of the second electrode plate 2 includes the active material region A and the guide region B2, and the tab 12 may be provided at the position close to one end of the main body portion 11 in the winding length. The current collector 114 may be coated with the active material layer 112 in the active material region A, and the portion of the current collector 114 beyond the side edge of the active material region A forms the guide region B2.

As shown in Fig. 13C, the width of the separator 3 in the conductive region 121 is represented by W0, and two side edges of the separator 3 are both widened in the liquid guiding region 111 by W 1, such that the side edge of the separator 3 extends beyond the side edge of the main body portion 11 in the liquid guiding region 111 to facilitate absorption.

During winding, the respective tabs 12 of the first electrode plate 1 and the second electrode plate 2 are located on different sides in the extending direction of the winding axis K.

In the third embodiment, as shown in Fig. 14A, the first electrode plate 1 is a positive electrode plate, and is structurally the same as that shown in Fig. 13A. In the extending direction of the winding axis K, the active material region A has a width W4, the infiltration region B1 has a width W3, the guide region B2 has a width W2, and the tab 12 has a width W5.

As shown in Fig. 14B, the second electrode plate 2 is a negative electrode plate, and is structurally the same as that shown in Fig. 14A. In the extending direction of the winding axis K, the active material region A has a width W8, the infiltration region B1 has a width W7, the guide region B2 has a width W6, and the tab 12 has a width W9.

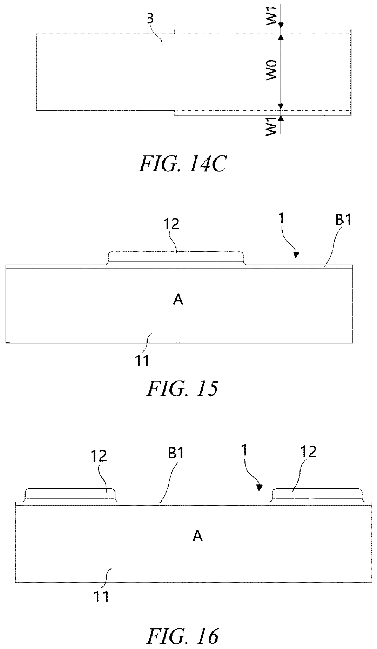

As shown in Fig. 14C, the width of the separator 3 in the conductive region 121 is represented by W0, and two side edges of the separator 3 are both widened in the liquid guiding region 111 by W 1, such that the side edge of the separator 3 extends beyond the side edge of the main body portion 11 in the liquid guiding region 111 to facilitate absorption. Optionally, the separator 3 may also use the equal-width structure shown in Fig. 12C.

In some other embodiments, as shown in Fig. 15, the first electrode plate 1 may be a positive electrode plate or a negative electrode plate, the main body portion 11 of the first electrode plate 1 includes the active material region A and the infiltration region B1 provided side by side in the extending direction of the winding axis K, and the infiltration region B1 is located on the outer side of the active material region A. The tab 12 may be located in the middle region of the main body portion 11 in the winding length, and after winding, the conductive region 121 is located in the middle region of the wound main body S in the radial direction.

In some other embodiments, as shown in Fig. 16, the first electrode plate 1 may be a positive electrode plate or a negative electrode plate; and the difference thereof from that in Fig. 15 lies in that the side portion of the main body portion 11 in the extending direction of the winding axis K is provided with two tabs 12, and the two tabs 12 are spaced apart from each other and respectively located at the positions close to the two ends of the main body portion 11 in the winding length. After winding, the end portion of the wound main body S is provided with two conductive regions 121 and one liquid guiding region 111, and the liquid guiding region 111 is located between the two conductive regions 121.

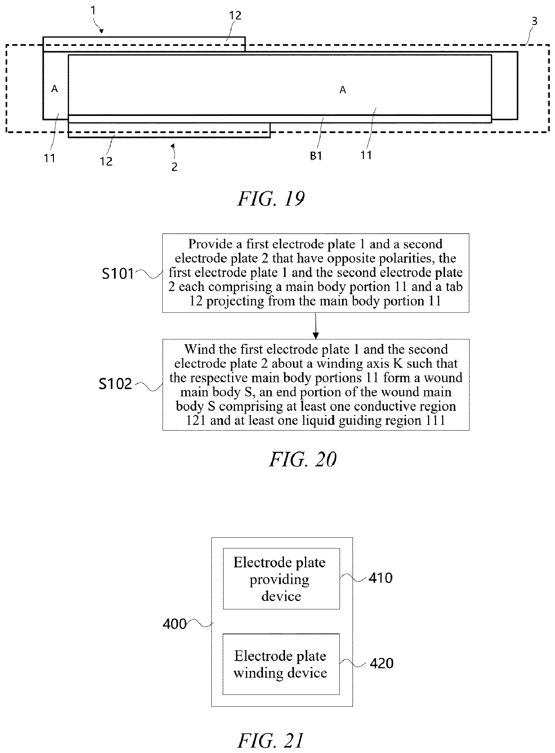

Fig. 19 is a schematic structural diagram of the first electrode plate 1, the second electrode plate 2 and the separator 3 superimposed prior to winding according to some embodiments. For example, the first electrode plate 1 may be a negative electrode plate, the second electrode plate 2 is correspondingly a positive electrode plate, the first electrode plate 1 is longer than the second electrode plate 2, and the separator 3 is longer than the first electrode plate 1. The tabs 12 of the first electrode plate 1 and the second electrode plate 2 are opposite in a leading-out direction of the winding axis K, and are both located at the position of the main body portion 11 close to a first end in the winding direction, the first end refers to the left end, and the tabs 12 continuously extend in a partial winding length direction of the main body portion 11.

The main body portion 11 of the first electrode plate 1 includes only an active material coating region A, the main body portion 11 of the second electrode plate 2 includes the active material region A and the infiltration region B1 provided side by side in the extending direction of the winding axis K, and the infiltration region B1 is located on the outer side of the active material region A. In the extending direction of the winding axis K, width edges on two sides of the active material coating region A of the first electrode plate 1 both exceed width edges of the corresponding sides of the active material coating region A of the second electrode plate 2. The separator 3 uses an equal-width structure, and the two side edges of the separator 3 are both beyond the side edges of the main body portions 11 of the first electrode plate 1 and the second electrode plate 2 located on the same side, and are not beyond the outer side edges of the tabs 12.

The above-mentioned specific embodiments only schematically show the structural forms and combination manners of the first electrode plate 1, the second electrode plate 2 and the separator 3, and different first electrode plates 1, second electrode plates 2 and separators 3 may be combined according to requirements in an actual arrangement.

Also, the present application provides a manufacturing method for the electrode assembly 10. As shown in Fig. 20, in some embodiments, the manufacturing method includes:

S110, providing a first electrode plate 1 and a second electrode plate 2 that have opposite polarities, the first electrode plate 1 and the second electrode plate 2 each including a main body portion 11 and a tab 12 projecting from the main body portion 11; and

S120, winding the first electrode plate 1 and the second electrode plate 2 about the winding axis K such that the respective main body portions 11 form a wound main body S, an end portion of the wound main body S including at least one conductive region 121 and at least one liquid guiding region 111.

The tab 12 is led out of the conductive region 121, is wound by at least one turn, and is used for electrical connection to the terminal 1022 of the battery cell 100, and the liquid guiding region 111 is arranged adjacent to the conductive region 121 in a radial direction of the wound main body S and is used for guiding an electrolyte to flow into the interior of the wound main body S.

After the winding step S120, the tab 12 at the end portion of the wound main body S is flattened such that the tab 12 forms the bent portion to facilitate electrical connection to the terminal 1022.

In the embodiment of the present application, the end portion of the wound main body S simultaneously has the conductive region 121 and the liquid guiding region 111. Since no tab 12 is provided in the liquid guiding region 111, after the tab 12 of the conductive region 121 is flattened, the electrolyte in the battery cell 100 also easily flows into the interior of the wound main body S through the gap between the first electrode plate 1 and the second electrode plate 2 in the liquid guiding region 111, ensuring the infiltration performance of the electrode assembly 10, so that the electrolyte can sufficiently react with the active materials on the first electrode plate 1 and the second electrode plate 2 during charging and discharging of the battery, and the performance of the battery cell 100 is thus optimized.

Furthermore, since the tab 12 extends continuously and is wound by at least one turn in the conductive region 121, the tab has better connection strength with the main body portion 11 in a circumferential direction, such that a root portion of the tab 12 has a better self-supporting effect, a crumpling phenomenon of the tab 12 is prevented in the process of flattening the tab 12 by applying a circumferential acting force, the shape of a flattened region is stabilized, the effect of welding the tab 12 and the terminal 1022 is optimized, it is ensured that the electrode assembly 10 reliably transmits electric energy outwards, and the overcurrent capacity is improved. In addition, particles generated during welding of the tab 12 are less prone to dropping between the first electrode plate 1 and the second electrode plate 2 of the liquid guiding region 111 in the circumferential direction, so that the working reliability of the electrode assembly 10 can be improved.

Finally, the present application provides a manufacturing apparatus 400 for the electrode assembly 10. As shown in Fig. 21, in some embodiments, the manufacturing apparatus 400 includes: an electrode plate providing device 410 and an electrode plate winding device 420. The electrode plate providing device 410 is configured to provide a first electrode plate 1 and a second electrode plate 2 that have opposite polarities, the first electrode plate 1 and the second electrode plate 2 each including a main body portion 11 and a tab 12 projecting from the main body portion 11; and the electrode plate winding device 420 is configured to wind the first electrode plate 1 and the second electrode plate 2 about the winding axis K such that the respective main body portions 11 form a wound main body S, an end portion of the wound main body S including at least one conductive region 121 and at least one liquid guiding region 111. The tab 12 is led out of the conductive region 121, is wound by at least one turn, and is used for electrical connection to the terminal 1022 of the battery cell 100, and the liquid guiding region 111 is arranged adjacent to the conductive region 121 in a radial direction of the wound main body S and is used for guiding an electrolyte to flow into the interior of the wound main body S.

The manufacturing apparatus 400 of this embodiment of the present application has the same technical effect as the manufacturing method.

Although the present application is described with reference to the preferred embodiments, various improvements may be made thereto, and the components thereof may be replaced with equivalents, without departing from the scope of the present application. In particular, the technical features mentioned in the embodiments can be combined in any manner as long as there is no structural conflict. The present application is not limited to specific embodiments disclosed herein, but includes all technical solutions that fall within the scope of the claims.

## Claims

1. An electrode assembly (10) for a battery cell (100), wherein the electrode assembly (10) comprises: a first electrode plate (1) and a second electrode plate (2) that have opposite polarities, the first electrode plate (1) and the second electrode plate (2) each comprising a main body portion (11) and a tab (12) projecting from the main body portion (11), and the first electrode plate (1) and the second electrode plate (2) being wound about a winding axis (K) such that the respective main body portions (11) form a wound main body (S); and
an end portion of the wound main body (S) comprises at least one conductive region (121) and at least one liquid guiding region (111), the tab (12) being led out of the conductive region (121), being wound by at least one turn, and being used for electrical connection to a terminal (1022) of the battery cell (100), and the liquid guiding region (111) being arranged adjacent to the conductive region (121) in a radial direction of the wound main body (S) and being used for guiding an electrolyte to flow into an interior of the wound main body (S).

2. The electrode assembly (10) according to claim 1, wherein the tab (12) is wound by a plurality of turns in the conductive region (121).

3. The electrode assembly (10) according to claim 1 or 2, wherein the sum of the number of the conductive regions (121) and the number of the liquid guiding regions (111) is greater than or equal to three, and the regions are alternately provided in the radial direction of the wound main body (S).

4. The electrode assembly (10) according to claim 3, wherein the conductive region (121) is located at a middle region of the end portion of the wound main body (S) in the radial direction, and one of the liquid guiding regions (111) is provided on either side of the conductive region (121) in the radial direction.

5. The electrode assembly (10) according to any one of claims 1 to 3, wherein at least one of the first electrode plate (1) and the second electrode plate (2) is provided with a plurality of the tabs (12) at intervals in a winding direction to form a plurality of the conductive regions (121) provided at intervals at the end portion of the wound main body (S) in the radial direction.

6. The electrode assembly (10) according to claim 5, wherein two conductive regions (121) are provided and are respectively located on an inner side and an outer side of the end portion of the wound main body (S) in the radial direction, and the liquid guiding region (111) is located between the two conductive regions (121).

7. The electrode assembly (10) according to claim 1 or 2, wherein one conductive region (121) and one liquid guiding region (111) are provided, and the conductive region (121) is located on an inner side of the liquid guiding region (111) in the radial direction.

8. The electrode assembly (10) according to any one of claims 1 to 7, wherein the liquid guiding regions (111) at two ends of the wound main body (S) have the same radial dimension, and the conductive regions (121) at the two ends of the wound main body (S) have the same radial dimension; or
the liquid guiding region (111) at one end of the wound main body (S) has the same radial dimension as the conductive region (121) at the other end.

9. The electrode assembly (10) according to any one of claims 1 to 8, further comprising a separator (3), wherein the separator (3) is used for separating the first electrode plate (1) from the second electrode plate (2); and the separator (3), the main body portion (11) of the first electrode plate (1) and the main body portion of the second electrode plate (2) are wound to form the wound main body (S); and
in an extending direction of the winding axis (K), the portion of the separator (3) located in the liquid guiding region (111) is beyond a side edge of the main body portion (11) of the first electrode plate (1) and beyond a side edge of the main body portion (11) of the second electrode plate (2).

10. The electrode assembly (10) according to any one of claims 1 to 9, further comprising a separator (3), wherein the separator (3) is used for separating the first electrode plate (1) from the second electrode plate (2), the main body portion (11) of at least one of the first electrode plate (1) and the second electrode plate (2) comprises an active material region (A) and a flow guiding region (B) provided side by side in an extending direction of the winding axis (K), the flow guiding region (B) is located on an outer side of the active material region (A), and a gap between the surface of the main body portion (11) located in the flow guiding region (B) and the separator (3) is greater than a gap between the surface of the main body portion (11) located in the active material region (A) and the separator (3).

11. The electrode assembly (10) according to claim 10, wherein the flow guiding region (B) of at least one of the first electrode plate (1) and the second electrode plate (2) comprises an infiltration region (B1) adjacent to the active material region (A), and a gap between the surface of the main body portion (11) located in the infiltration region (B1) and the separator (3) is gradually increased from inside to outside in the extending direction of the winding axis (K).

12. The electrode assembly (10) according to claim 10 or 11, wherein the flow guiding region (B) of at least one of the first electrode plate (1) and the second electrode plate (2) comprises an infiltration region (B1) adjacent to the active material region (A), and the main body portion (11) of at least one of the first electrode plate (1) and the second electrode plate (2) comprises a current collector (114), an active material layer (112) and an infiltration layer (113), the active material layer (112) being provided on a surface of the current collector (114) and being located in the active material region (A), the infiltration layer (113) being provided on the surface of the current collector (114) and located in the infiltration region (B1), and the infiltration layer (113) having a higher liquid absorption capacity than the active material layer (112).

13. The electrode assembly (10) according to claim 12, wherein the infiltration layer (113) comprises an inorganic ceramic coating, a high molecular polymer, and a binder.

14. The electrode assembly (10) according to claim 12 or 13, wherein the flow guiding region (B) of at least one of the first electrode plate (1) and the second electrode plate (2) further comprises a guide region (B2), and the region of the current collector (114) beyond the infiltration layer (113) in the extending direction of the winding axis (K) forms the guide region (B2).

15. The electrode assembly (10) according to claim 14, wherein the first electrode plate (1) is a positive electrode plate and is sequentially provided with the active material region (A), the infiltration region (B1) and the guide region (B2) from inside to outside in the extending direction of the winding axis (K), and the second electrode plate (2) is a negative electrode plate and is sequentially provided with the active material region (A) and the guide region (B2) from inside to outside along the winding axis (K).

16. The electrode assembly (10) according to any one of claims 10 to 15, wherein the separator (3) is located on a side edge of the liquid guiding region (111) of at least one of the first electrode plate (1) and the second electrode plate (2) and located between an outer side edge of the flow guiding region (B) and an outer side edge of the tab (12).

17. The electrode assembly (10) according to any one of claims 10 to 16, wherein an extension length of the flow guiding region (B) in a circumferential direction of the wound main body (S) is consistent with that of the active material region (A).

18. A battery cell (100), comprising:
a shell (101) provided with an opening (1011);
an end cap assembly (102) for closing the opening (1011), the end cap assembly (102) comprising an end cap body (1021) and a terminal (1022) provided on the end cap body (1021); and
the electrode assembly (10) of any one of claims 1 to 17 provided in the shell (101), the tab (12) of the first electrode plate (1) or the tab (12) of the second electrode plate (2) being electrically connected to the terminal (1022).

19. A battery (200), comprising:
the battery cell (100) according to claim 18; and
a case (201) for receiving the battery cell (100).

20. A power consuming device, comprising the battery according to claim 19, the battery being used for supplying electric energy to the power consuming device.

21. A manufacturing method for an electrode assembly (10), comprising:
providing a first electrode plate (1) and a second electrode plate (2) that have opposite polarities, the first electrode plate (1) and the second electrode plate (2) each comprising a main body portion (11) and a tab (12) projecting from the main body portion (11); and
winding the first electrode plate (1) and the second electrode plate (2) about a winding axis (K) such that the respective main body portions (11) form a wound main body (S), an end portion of the wound main body (S) comprising at least one conductive region (121) and at least one liquid guiding region (111);
wherein the tab (12) is led out of the conductive region (121), is wound by at least one turn, and is used for electrical connection to a terminal (1022) of the battery cell (100), and the liquid guiding region (111) is arranged adjacent to the conductive region (121) in a radial direction of the wound main body (S), and is used for guiding an electrolyte to flow into an interior of the wound main body (S).

22. A manufacturing apparatus (400) for an electrode assembly (10), comprising:
an electrode plate providing device (410) configured to provide a first electrode plate (1) and a second electrode plate (2) that have opposite polarities, the first electrode plate (1) and the second electrode plate (2) each comprising a main body portion (11) and a tab (12) projecting from the main body portion (11); and
an electrode plate winding device (420) configured to wind the first electrode plate (1) and the second electrode plate (2) about a winding axis (K) such that the respective main body portions (11) form a wound main body (S), an end portion of the wound main body (S) comprising at least one conductive region (121) and at least one liquid guiding region (111);
wherein the tab (12) is led out of the conductive region (121), is wound by at least one turn, and is used for electrical connection to a terminal (1022) of the battery cell (100), and the liquid guiding region (111) is arranged adjacent to the conductive region (121) in a radial direction of the wound main body (S), and is used for guiding an electrolyte to flow into an interior of the wound main body (S).
